# EUROPEAN PATENT APPLICATION

(11) **EP 1 484 334 A2**
(43) Date of publication of application: **08.12.2004**
(21) Application number: 04252646.7
(22) Date of filing: 06.05.2004
(51) Int. Cl.: C07F 9/6574

(54) **Process for producing phosphite**

(30) Priority: 08.05.2003 JP 2003130025
(71) Applicant: Sumitomo Chemical Company, Limited, Chuo-ku Osaka 541-8550 (JP)
(72) Inventor: Inoue, Kikumitsu, Sanda-shi Hyogo (JP); Nishii, Shinji, Ibaraki-shi Osaka (JP); Kikuchi, Taketoshi, Ibaraki-shi Osaka (JP)
(74) Representative: Cresswell, Thomas Anthony

(57) **Abstract**

There is provided a process for producing a phosphite of the formula (I): 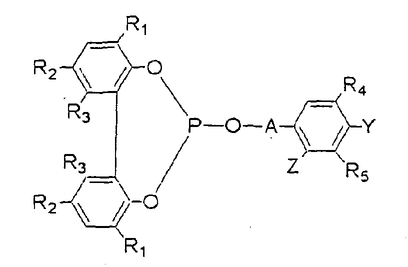 wherein R₁, R₂, R₄ and R₅ each independently represent
a hydrogen atom, a C1-8 alkyl group, a C5-8 cycloalkyl group,
a C6-12 alkylcycloalkyl group, a C7-12 aralkyl group or
a phenyl group or a phenyl group substituted with an alkyl or an alkoxy group;
R₃ represents a hydrogen atom or a C1-8 alkyl group;
A represents a C2-8 alkylene group or a *-C(=O)- or *-C(=O)-R₇- group in which R₇ represents a C1-8 alkylene group, and the bond marked with * is the bond connected with the oxygen atom; and
one of Y and Z represents a hydroxyl group, a C1-8 alkoxy group or a C7-12 aralkyloxy group and the other one represents a hydrogen atom or a C1-8 alkyl group,
which process comprises the steps of
(a) coupling a phenol compound of formula (II): 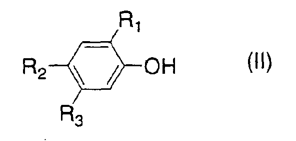 wherein R₁ to R₃ are as defined above, in the presence of an inert solvent under oxidative conditions to produce a reaction mixture comprising a biphenol of formula (III): 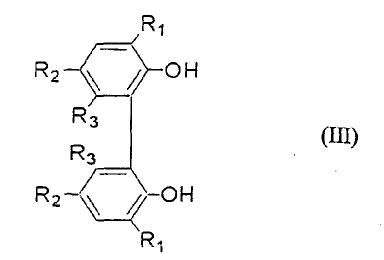 wherein R₁ to R₃ are as defined above,
(b) extracting the biphenol compound of formula (III) from the reaction mixture with a hydrophobic organic solvent, and
(c) reacting the biphenol compound of formula (III) in the solution of the hydrophobic organic solvent, with phosphorous trihalide, and
   a hydroxyl compound of formula (IV): 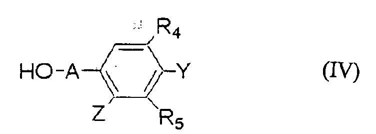
wherein R₄, R₅, Y, Z and A are as defined above, in the presence of a dehydrohalogenating agent.

## Description

### BACKGROUND OF THE INVENTION

The present invention relates to a process for producing a phosphite.

The phosphite of formula (1) depicted below are known to be a useful stabilizer to prevent deterioration of organic materials such as thermoplastic resin, thermosetting resin, natural or synthetic rubber, mineral oil, lubricating oil, adhesive or paint.

It is disclosed in JP11-217470A that the phosphite is typically produced from dry solid biphenol compounds, phosphorous trichloride and a hydroxyl compound, and it is also disclosed in the Examples of JP2000-281606A that the biphenol compounds are obtained as mere crude solid by oxidative coupling of corresponding phenols.

According to the present invention, the phospite of formula (I) depicted below can be advantageously produced in industrial scale of production from a crude biphenol, and working environment where dusting is caused by handling of the solid biphenol can be improved.

The present invention provides a process for producing a phosphite of the formula (I): 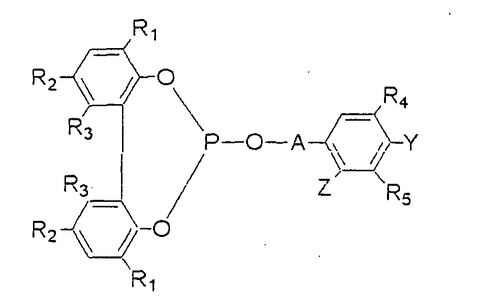 wherein R₁, R₂, R₄ and R₅ each independently represent
a hydrogen atom, a C1-8 alkyl group, a C5-8 cycloalkyl group,
a C6-12 alkylcycloalkyl group, a C7-12 aralkyl group or
a phenyl group or a phenyl group substituted with an alkyl or an alkoxy group;
R₃ represents a hydrogen atom or a C1-8 alkyl group;

A represents a C2-8 alkylene group or a *-C(=O)- or *-C(=O)-R₇- group in which R₇ represents a C1-8 alkylene group, and the bond marked with * is the bond connected with the oxygen atom; and
one of Y and Z represents a hydroxyl group, a C1-8 alkoxy group or a C7-12 aralkyloxy group and the other one represents a hydrogen atom or a C1-8 alkyl group,
which process comprises the steps of
(a) coupling a phenol compound of formula (II): 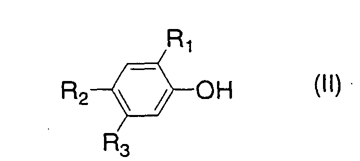 wherein R₁ to R₃ are as defined above, in the presence of an inert solvent under oxidative condition to produce a reaction mixture containing a biphenol of formula (III): 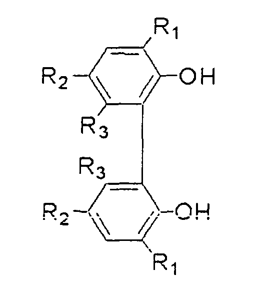 wherein R₁ to R₃ are as defined above,
(b) extracting the biphenol compound of formula (III) from the reaction mixture with a hydrophobic organic solvent, and
(c) reacting the biphenol compound of formula (III) in the solution of the hydrophobic organic solvent, with phosphorous trihalide, and
   a hydroxyl compound of formula (IV): 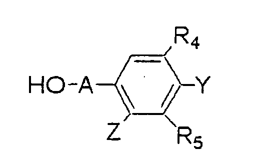
wherein R₄, R₅, Y, Z and A are as defined above, in the presence of a dehydrohalogenating agent.

### DETAILED DESCRIPTION OF THE INVENTION

A description will be made to the substituents R₁ to R₅ and Y, Z and A as below.

Typical examples of the C1-8 alkyl group represented by R₁ to R₅ include, for example, methyl, ethyl, n-propyl, i-propyl, n-butyl, i-butyl, sec-butyl, t-butyl, t-pentyl, i-octyl, t-octyl and 2-ethylhexyl.

Typical examples of the C5-8 cycloalkyl group represented by R₁, R₂, R₄ or R₅ include, for example, cyclopentyl, cyclohexyl, cycloheptyl and cyclooctyl.

Typical examples of the C6-12 alkylcycloalkyl group represented by R₁, R₂, R₄ or R₅ include, for example, 1-methylcyclopentyl, 1-methylcyclohexyl and 1-methyl-4-i-propylcyclohexyl.

Typical examples of the C7-12 aralkyl group represented by R₁, R₂, R₄ or R₅ include, for example, benzyl, *α* -methylbenzyl and α , α -dimethylbenzyl.

R₁ and R₄ are preferably a t-alkyl group such as t-butyl, t-pentyl and t-octyl, cyclohexyl or i-methylcyclohexyl. R₂ is preferably a C1-5 alkyl group such as methyl, ethyl, n-propyl, i-propyl, n-butyl, 1-butyl, sec-butyl, t-butyl, and t-pentyl, particularly methyl, t-butyl or t-pentyl. R₅ is preferably hydrogen atom or a C1-5 alkyl group such as methyl, ethyl, n-propyl, i-propyl, n-butyl, i-butyl, sec-butyl, t-butyl and t-pentyl.

R₃ is preferably a hydrogen atom or a C1-5 alkyl group, particularly preferred is hydrogen atom or a methyl group.

Typical examples of the C1-8 alkylene group represented by R₇ include, for example, methylene, ethylene, propylene, butylene, pentamethylene, hexamethylene, octamethylene and 2,2-dimethyl-1,3-propylene. R₇ is preferably, ethylene or the like.

Examples of the C2-8 alkylene group include, for example, ethylene, propylene, butylene, pentamethylene, hexamethylene, octamethylene and 2,2-dimethyl-1,3-propylene.

Examples of the C1-8 alkoxy group represented by Y or Z include, for example, alkoxy group whose alkyl moiety is methyl, ethyl, n-propyl, i-propyl, n-butyl, 1-butyl, sec-butyl, t-butyl, t-pentyl, 1-octyl, t-octyl or 2-ethylhexyl.

Examples of the C7-12 aralkyloxy group represented by Y or Z include, for example, an aralkyloxy group whose aralkyl moiety is benzyl, α -methylbenzyl or α , α -dimethylbenzyl.

The oxidative coupling of the phenol of formula (II) as defined above is typically conducted by reacting the phenol compound of formula (II) with hydrogen peroxide in an inert solvent in the presence of a base and preferably an additional catalyst such as iron, an iron compound, copper or a copper compound, or a chromium, manganese, nickel, tin, or titanium compound. The resulting reaction mixture containing the crude biphenol of formula (III) is usually extracted typically with a hydrophobic organic solvent after completion of the coupling reaction and optionally followed by neutralization of the base employed with an acid, typically an inorganic acid such as hydrochloric acid, hydrogen sulfate, nitric acid or phosphoric acid. The extracted solution of biphenol of formula (III) in the hydrophobic organic solvent may be used as it is in the reaction with phosphorous trihalide and the hydroxyl compound of formula (IV).

Hydrogen peroxide is preferably added dropwise to the phenol compound of formula (II) in the presence of the inert solvent and the base.

Examples of the inert solvent include, for example, a solvent that does not adversely affect the coupling reaction such as water, an alcohol (e.g., methanol, ethanol, propanol, i-propanol, and butanol), or mixtures of the alcohol(s) and water. Preferred is water.

The amount of the inert solvent that may be used is usually 50 to 1000 parts by weight per part by weight of the phenol of formula (II).

Examples of the base suitably used in the coupling reaction include, for example, sodium hydroxide, potassium hydroxide, lithium hydroxide,, sodium carbonate, potassium carbonate, and lithium carbonate.

The amount of the base that may be used is preferably 0.5 to 4 moles per mol of the phenol of formula (II).

The amount of hydrogen peroxide is preferably 0.3 to 2 moles per mol of the phenol of formula (II).

The reaction is preferably conducted at a temperature range of 75 to 90°C.

Specific examples of the phenol compound of formula (II) that may be used to prepare the biphenol of formula (III) include, for example, p-cresol, p-ethylphenol, p-propylphenol, p-i-propylphenol, p-n-butylphenol, p-sec-butylphenol, p-t-butylphenol, p-t-amylphenol, p-t-octylphenol, p-nonylphenol, p-phenylphenol, 2,4-dimethylphenol, 2,4-diethylpehnol, 2-t-butyl-4-ethylphenol, 2-t-butyl-4-isopropylphenol, 2,4-di-t-butylphenol, 2,4-di-t-amylphenol, 2,4-di-t-amylphenol, 2,4-di-t-octylphenol, 2-(1-methylcyclohexyl)-4-methylphenol, 2-cyclohexyl-4-methylphenol, 4-t-butyl-2-phenylphenol, 2,4,5-trimethylphenol, 2-t-butyl-3-ethyl-4-methylphenol, and 2,4-di-t-butyl-5-methylphenol.

A carboxylic acid salt of formula (V):

[R₆-COO⁻]ₙ Mⁿ⁺ (V)

wherein R₆ represents an alkyl group, cycloalkyl group, a phenyl group, or a phenyl group substituted with an alkyl or alkoxy group,
n represents a integer of 1 or 2,
when n represents 1, M represents an alkali metal atom, and
when n represents 2, M represents an alkaline earth metal atom, is preferably added to the coupling reaction in addition to the base and the inert solvent.

The alkyl group represented by R₆ include, for example, a C6-17 alkyl group such as n-hexyl, n-heptyl, n-octyl, t-octyl, n-nonyl, n-decyl, n-dodecyl, n-tridecyl, n-tetradecyl, n-pentadecyl, n-hexadecyl, and n-hetpadecyl.

The cycloalkyl and alkylcycloalkyl group represented by R₆ include the same cycloalkyl groups and alkylcycloalkyl groups exemplified for R₁ and R₂.

Examples of the alkali metal atom represented by M include, sodium, potassium, lithium and cesium.

Examples of the alkaline earth metal include, for example, calcium, magnesium, and barium.

Specific examples of the carboxylic acid salt of formula (V) include, for example, alkali metal n-decanoate such as sodium n-decanoate, potassium n-decanoate, lithium n-decanoate, or cesium n-decanoate, and alkaline earth metal decanoate such as calcium n-decanoate,, magnesium n-decanoate, or barium n-decanoate, alkali metal laurinate such as sodium laurianate, potassium laurinate, lithium laurinate, or cesium laurinate; alkaline metal earth laurinate such as calcium laurinate, magnesium laurinate, or barium laurinate; alkalil metal myristate such as sodium myristate, potassium myristate,lithium myristate, or cesium myristate; alkaline earth metal myristate such as calcium myristate, magnesium myristate, or barium myristate; alkali metal palmitate such as sodium palmitate, potassium palmitate, lithium palmitate, or cesium palmitate; alkaline earth metal palmitate such as calcium palmitate, magnesium palmitate or barium palmitate; alkali metal stearate such as sodium stearate, potassium stearate, lithium stearate or cesium stearate; and alkaline earth metal stearate such as calcium stearate, magnesium stearate, or barium stearate.

Preferred are the alkali metal laurinates and still more preferred is sodium laurinate.

The amount of the carboxylic acid salt of formula (V) is preferably 0.001 to 0.1 mol per mol of the phenol of formula (II).

The carboxylic acid salt of formula (V) can be readily obtained by reacting a carboxylic acid of formula (VI):

R₆COOH

wherein R₆ is as defined above, typically with a base selected from a alkali metal hydroxide, alkaline earth metal hydroxide, alkali metal carbonate, and alkaline earth metal carbonate.

The base may also be used together with the carboxylic acid of formula (VI) to prepare *in situ* the carboxylic acid salt of formula (V).

The coupling reaction is preferably conducted in a reactor made of iron or of a material containing iron. Examples of such material include, for example, stainless steel, and steel.

Examples of the stainless steel include, for example, SUS304, SUS304L, SUS316, and SUS316L.

The reactor equipped, for example, with an agitation blade, baffle, temperature regulating device such as cooling tube, and heating tube such as temperature regulating coil is usually used in the reaction. The inner area of the reactor defined is as the total area of the inner wall of the reactor, the surface areas of the agitation blade, baffle, cooling tube and heating tube that contacts with the reaction liquid placed in the reactor including the reactants and a reaction solvent employed, hereinafter referred to as the "contact area", is preferably 1 x 10⁻⁴ m² or more per 1 kg of the reaction liquid, and more preferably 1 x 10⁻³ m² or more per 1 kg of the reaction liquid in view of the reaction rate, but is preferably less than 1 x 10⁻¹ m² per 1 kg of the reaction liquid in view of the operability of the process.

Thus, the contact area is more preferably 1 x 10⁻⁴ m² per 1 kg of the reaction liquid to 1 x 10⁻¹ m² per 1 kg of the reaction liquid, and still more preferably 1 x 10⁻³ m² per 1 kg of the reaction liquid to 1 x 10⁻² m² per 1 kg of the reaction liquid.

The contact area may be suitably adjusted by changing the surface area of the inner wall of the reactor, the surface areas of the agitation blade, the baffle, cooling tube, and heating tube.

The progress of the reaction can be monitored by conventional method such as high performance liquid chromatography analysis or the like to check the amount of phenol of formula (II) and/or biphenol of formula (III). After completion of the reaction, the resulting reaction mixture may be mixed with a reducing agent such as sodium sulfite to decompose the remaining hydrogen peroxide, if necessary.

After the decomposition treatment, an acid, preferably inorganic acid such as sulfuric acid, hydrochloric acid, nitric acid, or phosphoric acid may be added to the resulting mixture to neutralize the base employed in the coupling reaction, if necessary.

Specific examples of the biphenols (II) include, for example,
2,2'-methylenebis(4-methyl-6-t-butylphenol),
2,2'-methylenebis(4-ethyl-6-t-butylphenol),
2,2'-methylenebis(4-n-propyl-6-t-butylphenol),
2,2'-methylenebis(4-i-propyl-6-t-butylphenol),
2,2'-methylenebis(4-n-butyl-6-t-butylphenol),
2,2'-methylenebis(4-i-butyl-6-t-butylphenol),
2,2'-methylenebis(4,6-di-t-butylphenol),
2,2'-methylenebis(4-t-pentyl-6-t-butylphenol),
2,2'-methylenebis(4-nonyl-6-t-butylphenol),
2, 2'-methylenebis(4-t-octyl-6-t-butylphenyl),
2,2'-methylenebis(4-methyl-6-t-pentylphenol),
2,2'-methylenebis(4-methyl-6-cyclohexylphenol),
2,2'-methylenebis[4-methyl-6-( α -methylcyclohexyl)phenol],
2,2'-methylenebis(4-methyl-6-t-nonylphenol),
2,2'-methylenebis(4-methyl-6-t-octylphenol),
2,2'-methylenebis(4,6-di-t-pentylphenol),
2,2'-methylenebis-[4-nonyl-6-(α -methylbenzyl)phenol],
2,2'-methylenebis[4-nonyl-6-( α, *α* -dimethylbenzyl)phenol],
2,2'-ethylidenebis(4-methyl-6-butylphenol),
2,2'-ethylidenebis(4-ethyl-6-t-butylphenol),
2,2'-ethylidenebis(4-n-propyl-6-t-butylphenol)
2,2'-ethylidenebis(4-i-propyl-6-t-butylphenol),
2,2'-ethylidenebis(4-n-butyl-6-t-butylphenol),
2,2'-ethylidenebis(4-i-butyl-6-t-butylphenol),
2,2'-ethylidenebis(4,6-di-t-butylphenol),
2,2'-ethylidenebis(4-t-pentyl-6-t-butylphenol),
2,2'-ethylidenebis(4-nonyl-6-t-butylphenol),
2,2'-ethylidenebis(4-t-octyl-6-t-butylphenol),
2,2'-ethylidenebis(4-methyl-6-t-pentylphenol),
2,2'-ethylidenebis(4-methyl-6-cyclohexylphenol),
2,2'-ethylidenebis[4-methyl-6-( α -methylcyclohexyl)phenol),
2,2'-ethylidenebis(4-methyl-6-nonylphenol),
2,2'-ethylidenebis(4-methyl-6-t-octylphenol),
2,2'-ethylidenebis(4,6-di-t-pentylphenol),
2,2'-ethylidenebis[4-nonyl-6-( α -methylbenzyl)phenol],
2,2'-ethylidenebis[4-nonyl-6-(α,α-dimethylbenzyl)phenol],
2,2'-propylidenebis(4-methyl-6-t-butylphenol),
2,2'-propylidenebis(4-ethyl-6-t-butylphenol),
2,2'-propylidenebis(4-n-propyl-6-t-butylphenol),
2, 2'-propylidenebis(4-i-propyl-6-t-butylphenol),
2,2'-propylidenebis(4-n-butyl-6-t-butylphenol),
2,2'-propylidenebis(4-i-butyl-6-t-butylphenol),
2,2'-propylidenebis(4,6-di-t-butylphenol),
2, 2'-propylidenebis(4-t-pentyl-6-t-butylphenol),
2,2'-propylidenebis(4-nonyl-6-t-butylphenol),
2,2'-propylidenebis(4-t-octyl-6-t-butylphenol),
2,2'-propylidenebis(4-methyl-6-t-pentylphenol),
2,2'-propylidenebis(4-methyl-6-cyclohexylphenol),
2,2'-propylidenebis[4-methyl-6-( α -methylcyclohexyl)phenol],
2,2'-propylidenebis(4-niethyl-6-nonylphenol),
2,2'-propylidenebis(4-methyl-1-6-t-octyphenol),
2,2'-propylidenebis(4,6-di-t-pentylphenol),
2,2'-propylidenebis[4-nonyl-6-( α -methylbenzyl)phenol],
2,2'-propylidenebis[4-nonyl-6-( α, α -dimethylbenzyl)phenol],
2,2'-butylidenebis(4-methyl-6-t-butylphenol),
2,2'-butylidenebis(4-ethyl-6-t-butylphenol),
2,2'-butylidenebis(4,6-di-t-butylphenol),
2,2'-butylidenebis(4-methyl-6-cyclohexylphenol),
2,2'-butylidenebis[4-methyl-6-( α -methylcyclohexyl)phenol],
2,2'-butylidenebis(4,6-di-t-pentylphenol),
2,2'-i-butylidenebis(4-methyl-6-t-butylphenol),
2,2'-i-butylidenebis(4-ethyl-6-t-butylphenol),
2,2'-i-butylidenebis(4,6-di-t-butylphenol),
2,2'-i-butylidenebis(4-methyl-6-cyclohexylphenol),
2,2'-i-butylidenebis[4-methyl-6-( α -methylcyclohexyl)phenol)],
2,2'-i-butylidenbis(4,6-di-t-pentylphenol),
2,2'-i-pentylidenebis(4-methyl-6-t-butylphenol),
2,2'-i-pentylidenebis(4-ethyl-6-t-butylphenol),
2,2'-i-pentylidenebis(4,6-di-t-butylphenol),
2,2'-i-pentylidenebis(4-methyl-6-cyclohexylphenol),
2,2'-pentylidenebis[ α -methyl-6-(α -methylcyclohexy)phenol],
2,2'-pentylidenebis(4,6-di-t-pentylphenol), biphenyl-2,2'-diol, and
3,3',5,5'-tetra-t-butylbiphenyl-2,2'-diol and 1,1'-binaphthyl-2,2'-diol.

The resulting reaction mixture, which may be diluted with water if necessary, is typically extracted with a hydrophobic organic solvent to obtain a solution of the biphenol of formula (III) in the hydrophobic organic solvent. The extract solution is preferably washed with water and dehydrated, and more preferably purified by using carbon charcoal, prior to the reaction with phosphorous trihalide.

Examples of the hydrophobic organic solvent include, for example, an aromatic hydrocarbon solvent such as benzene, toluene, xylene, or ethylbenzene; a halogenated aromatic hydrocarbon solvent such as monochlorobenzene or dichlorobenzene; an aliphatic hydrocarbon solvent such as n-hexane, n-heptane, cyclohexane; an ether solvent such as diethyl ether, dibutyl ether, or diisopropyl ether; a halogenated aliphatic hydrocarbon solvent such as dichloromethane or chloroform; and mixtures thereof.

The amount of the hydrophobic organic solvent is preferably 0.5 to 10 parts by weight per part by weight of the phenol compound of formula (II).

The dehydration is usually conducted by removing water contained in the extract solution out of the solution as an azeotropic distillate under reduced pressure or atmospheric pressure at a suitable azeotropic temperature of the water and the hydrophobic organic solvent employed, typically at 60 to 190°C, more preferably at 60 to 140°C.

The dehydration is preferably conducted so that the water-content in the dehydrated solution is 0.03 mol or less, more preferably 0.02 mol or less per mol of the biphenol of formula (II).

Next, a description will be made to the step of reacting the biphenol of formula (III) in a solution of the hydrophobic organic solvent, which is preferably dehydrated, with phosphorous trihalide in the presence of a dehydrohalogenating agent to produce a phosphorous compound of formula (VI): 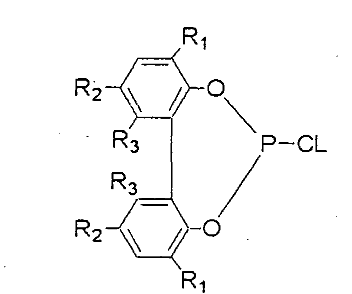 wherein R₁ to R₃ are as defined above, and CL means a chlorine atom (this reaction is referred to as the first reaction of the step), and
then reacting the resulting phosphorous compound of formula (VI) with the hydroxyl compound of formula (IV) as defined above in the presence of a dehydrochlorinating agent to produce the phosphite of formula (I) as defined above (this reaction is referred to as the second reaction of the step ).

Examples of the phosphorous trihalide include, for example, phosphorous trichloride and phosphorous tribromide. Particularly, preferred is phosphorous trichloride.

Preferred dehydrochlorinating agents are an N,N,N-trialkylamine having 6 to 14 carbon atoms in total, and specific examples thereof include, for example, triethylamine, tributylamine, diisopropylethylamine, disiobutylethylamine, and di-t-butylethylamine.

The amount of the phosphorous trihalide is preferably 1 mol or more, more preferably 1 to 1.15 moles, and still more preferably, 1.05 to 1.1 moles per mol of the bipehnol compound of formula (II).

The amount of the dehydrochlorinating agent is preferably 3 moles or more, and more preferably within the range of 3 to 3.5 moles per mol of the phosphorous trihalide.

The first reaction is usually conducted within a temperature range of from 5 to 140°C.

After completion of the first reaction, the resulting reaction mixture containing the phosphorous compound of formula (VI) is reacted with the hydroxyl compound of formula (IV).

Specific examples of the hydroxyl compound (IV) include, for example,
2-(3-t-butyl-4-hydroxyphenyl)ethanol,
2-(3-t-pentyl-4-hydroxyphenyl)ethanol,
2-(3-t-octyl-4-hydroxyphenyl)ethanol,
2-(3-cyclohexyl-4-hydroxyphenyl)ethanol,
2-[3-(1-methylcyclohexyl)-4-hydroxyphenyl)ethanol,
2-(3-t-butyl-4-hydroxy-5-methylphenyl)ethanol,
2-(3-t-pentyl-4-hydroxy-5-methylphenyl)ethanol,
2-(3-t-octyl-4-hydroxy-5-methylphenyl)ethanol,
2(3-cyclohexyl-4-hydroxy-5-methylphenyl)ethanol,
2-[3-(1-methylcyclohexyl)-4-hydroxy-5-methylphenyl)ethanol,
2-(3-t-butyl-4-hydroxy-5-ethylphenyl)ethanol,
2-(3-t-pentyl-4-hydroxy-5-ethylphenyl)ethanol,
2-(3-t-octyl-4-hydroxy-5-ethylphenyl)ethanol,
2-(3-cyclohexyl-4-hydroxy-5-ethylphenyl)ethanol,
2-[3-(1-methylcyclohexyl)-4-hydroxy-5-ethylphenyl)ethanol,
2-(3,5-di-t-butyl-4-hydroxyphenyl)ethanol,
2-(3-t-pentyl-4-hydroxy-5-t-butylphenyl)ethanol,
2-(3-t-octyl-4-hydroxy-5-t-butylphenyl)ethanol,
2-(3-cyclohexyl-4-hydroxy-5-t-butylphenyl)ethanol,
2-[3-(1-methylcyclohexyl)-4-hydroxy-5-butylphenyl)ethanol,
2-(3-t-butyl-4-methoxyphenyl)ethanol,
2-(3-t-pentyl-4-methoxyphenyl)ethanol,
2-(3-t-octyl-4-methoxyphenyl)ethanol,
2-(3-cyclohexyl-4-methoxyphenyl)ethanol,
2-[3-(1-methylcyclohexyl)-4-methoxyphenyl]ethanol,
2-(3-t-butyl-4-methoxy-5-methylphenyl)ethanol,
2-(3-t-pentyl-4-methoxy-5-methylphenyl)ethanol,
2-(3-t-octyl-4-methoxy-5-methylphenyl)ethanol,
2-(3-cyclohexyl-4-methoxy-5-methylphenyl)ethanol,
2-[3-(1-methylcyclohexyl)-4-methoxy-5-methylphenyl]ethanol,
2-(3-t-butyl-4-methoxy-5-ethylphenyl)ethanol,
2-(3-t-pentyl-4-methoxy-5-ethylphenyl)ethanol,
2-(3-t-octyl-4-methoxy-5-ethylphenyl)ethanol,
2-(3-cyclohexyl-4-methoxy-5-ethylphenyl)ethanol,
2-[3-(1-methylcyclohexyl)-4-methoxy-5-ethylphenyl]ethanol,
2-(3,5-di-t-butyl-4-methoxyphenyl)ethanol,
2-(3-t-pentyl-4-methoxy-5-t-butylphenyl)ethanol,
2-(3-t-octyl-4-methoxy-5-t-butylphenyl)ethanol,
2-(3-cyclohexyl-4-methoxy-5-t-butylphenyl)ethanol,
2-[3-(1-methylcyclohexyl)-4-methoxy-5-butylphenyl]ethanol,
3-(3-t-butyl-2-hydroxyphenyl)propanol,
3-(3-t-butyl-4-hydroxyphenyl)propanol,
3-(5-t-butyl-2-hydroxyphenyl)propanol,
3-(3-t-pentyl-4-hydroxyphenyl)propanol,
3-(3-t-octyl-4-hydroxyphenyl)propanol,
3-(3-cyclohexyl-4-hydroxyphenyl)propanol,
3-[3-(1-methylcyclohexyl)-4-hydroxyphenyl]propanol,
3-(3-t-butyl-2-hydroxy-5-methylphenyl)propanol,
3-(3-t-butyl-4-hydroxy-5-methylphenyl)propanol,
3-(3-t-butyl-4-hydroxy-5-methylphenyl)propanol,
3-(5-t-butyl-2-hydroxy-3-methylphenyl)propanol,
3-(3-t-pentyl-4-hydroxy-5-methylphenyl)propanol,
3-(3-t-octyl-4-hydroxy-5-methylphenyl)propanol,
3-(3-cyclohexyl-4-hydroxy-5-methylphenyl)propanol,
3-[3-(1-methylcyclohexyl)-4-hydroxy-5-ethylphenyl]propanol,
3-(3-t-butyl-4-hydroxy-5-ethylphenyl)propanol,
3-(3-cyclohexyl-4-hydroxy-5-ethylphenyl)propanol,
3-[3-(1-methylcyclohexyl)-4-hydroxy-5-ethylphenyl]propanol,
3-(3,5-di-t-butyl-2-hydroxyphenyl)propanol,
3-(3, 5-di-t-butyl-4-hydroxyphenyl)propanol,
3-(3-t-pentyl-4-hydroxy-5-t-butylphenyl)propanol,
3-(3-t-octyl-4-hydroxy-5-t-butylphenyl)propanol,
3-(3-cyclohexyl-4-hydroxy-5-t-butylphenyl)propanol,
3- [3-(1-methylcyclohexy)-4-hydroxy-5-t-butylphenyl]propanol,
3-(3-t-butyl-2-methoxyphenyl)propanol,
3-(3-t-butyl-4-methoxyphenyl)propanol,
3-(3-t-butyl-5-methoxyphenyl)propanol,
3-(3-t-pentyl-4-methoxyphenyl)propanol,
3-(3-t-octyl-4-methoxyphenyl)propanol,
3-(3-cyclohexyl-4-methoxyphenyl)propanol,
3-[3-(1-methylcyclohexyl)-4-methoxyphenyl]propanol,
3-(3-t-butyl-2-methoxy-5-methylphenyl)propanol,
3-(3-t-butyl-4-methoxy-5-methylphenyl)propanol,
3-(5-t-butyl-2-methoxy-3-methylphenyl)propanol,
3-(3-t-pentyl-4-methoxy-5-methylphenyl)propanol,
3-(3-t-octyl-4-methoxy-5-methylphenyl)propanol,
3-(3-cyclohexyl-4-methoxy-5-methylphenyl)propanol,
3-[3-(1-methylcyclohexy)-4-hydroxy-5-methylphenyl]propanol,
3-(3-t-butyl-4-methoxy-5-ethylphenyl)propanol,
3-(3-t-pentyl-4-methoxy-5-ethylphenyl)propanol,
3-(3-t-octyl-4-methoxy-5-ethylphenyl)propanol,
3-(3-cyclohexyl-4-methoxy-5-ethylphenyl)propanol,
3-[3-(1-methylcyclohexy)-4-hydroxy-5-ethylphenyl]propanol,
3-(3,5-di-t-butyl-2-methoxyphenyl)propanol,
3-(3,5-di-t-butyl-4-methoxyphenyl)propanol,
3-(3-t-pentyl-4-methoxy-5-t-butylphenyl)propanol,
3-(3-t-octyl-4-methoxy-5-t-butylphenyl)propanol,
3-(3-cyclohexyl-4-methoxy-5-t-butylphenyl)propanol,
3-[3-(1-methylcyclohexyl)-4-methoxy-5-t-butylphenyl]propanol,
3-(3-t-butyl-2-ethoxyphenyl)propanol, 3-(3-t-butyl-4-ethoxyphenyl)propanol,
3-(3-t-butyl-4-ethoxy-5-methylphenyl)propanol,
3-(3-t-butyl-2-ethoxy-5-methylphenyl)propanol,
3-(5-t-butyl-2-ethoxy-3-methylphenyl)propanol,
3-(3,5-di-t-butyl-4-ethoxyphenyl)propanol,
3-(3,5-di-t-butyl-2-ethoxypheny)propanol,
4-(3-t-butyl-2-hydroxyphenyl)butanol, 4-(3-t-butyl-4-hydroxyphenyl)butanol,
4-(3-t-butyl-4-hydroxy-5-methylphenyl)butanol,
4-(3-t-butyl-2-hydroxy-5-methylphenyl)butanol,
4-(5-t-butyl-2-hydroxy-3-methylphenyl)butanol,
4-(3,5-di-t-butyl-4-hydroxyphenyl)butanol,
4-(3,5-di-t-butyl-2-hydroxyphenyl)butanol,
4-(3-t-butyl-2-methoxyphenyl)butanol, 4-(3-t-butyl-4-methoxyphenyl)butanol,
4-(3-t-butyl-2-methoxy-5-methylphenyl)butanol,
4-(5-t-butyl-2-methoxy-3-methylphenyl)butanol,
4-(3,5-di-t-butyl-4-methoxyphenyl)butanol,
4-(3,5-di-t-butyl-2-methoxyphenyl)butanol,
5-(3-t-butyl-2-hydroxyphenyl)pentanol,
5-(3-t-butyl-4-hydroxyphenyl)pentanol,
5-(3-t-butyl-4-hydroxy-5-methylphenyl)pentanol,
5-(3-t-butyl-2-hydroxy-5-methylphenyl)pentanol,
5-(5-t-butyl-2-hydroxy-3-methylphenyl)pentanol,
5-(3,5-di-t-butyl-4-hydroxyphenyl)pentanol,
6-(3,5-di-t-butyl-2-hydroxyphenyl)hexanol,
6-(3-t-butyl-2-hydroxyphenyl)hexanol, 6-(3-t-butyl-4-hydroxyphenyl)hexanol, 6-(3-t-butyl-4-hydroxy-5-methylpheny l)hexanol,
6-(3-t-butyl-2-hydroxy-5-methylphenyl)hexanol,
6-(5-t-butyl-2-hydroxy-3-methylphenyl)hexanol,
6-(3,5-di-t-butyl-4-hydroxyphenyl)hexanol and
6-(3,5-di-t-butyl-2-hydroxyphenyl)hexanol.

The amount of the hydroxyl compound of formula (IV) is usually 1 mol or more, preferably 1 to 1.2 moles, per mol of the phosphorous compound of formula (VI).

The second reaction is usually conducted at a temperature of 0°C to the boiling point of the solvent employed, and preferably 30°C to the boiling point of the solvent employed.

The phosphite of formula (I) can be isolated after removal of the hydrochloride salt or hydrobromide salt by-produced during the reaction and of the solvent from the resulting reaction mixture containing the phosphite of formula (I).

The removal of the hydrogen chloride or hydrogen bromide salt is conducted, for example, by washing the reaction mixture with water and removed as water phase. Thereafter the separated organic phase may be washed with aqueous inorganic base solution, preferably with diluted aqueous inorganic base solution such as aqueous sodium hydroxide or potassium hydroxide, if necessary.

Then the organic solvent may be removed by evaporating the solution after washing and the resulting crude product may be purified, preferably by crystallization, which is typically conducted by adding a suitable solvent to the crude product.

Examples of the solvent that may be suitably used for crystallization include, for example, an aliphatic hydrocarbon solvent such as n-hexane, n-heptane, n-octane, n-nonane, or n-decane, an alicyclic hydrocarbon such as cyclohexane and mixtures thereof. The solvent is preferably used 0.3 to 1 part by weight, more preferably 0.5 to 0.8 part by weight per part by weight of the phosphite of formula (I).

The crystallization is conducted, for example, by cooling the solution of the phosphite of formula (I), at a constant rate or stepwise, to precipitate the desired product, and seed crystals may be added to facilitate the precipitation. The solution of the phosphite of formula (I) is preferably cooled to a temperature range of -10 to +40°C, more preferably 0 to 20°C. The precipitated crystals of the phosphite of formula (I) are collected typically by filtration and the collected crystals may be washed and dried. The obtained crystals may be further purified by recrystallization, if necessary.

### Examples

The following Examples further illustrate the present invention in detail but are not to be construed to limit the scope thereof.

### Synthesis of 3,3',5,5'-tetra-t-butylbiphneyl-2,2'-diol

### (i) Oxidative coupling of 3,5-di-t-butylphenol

To a reactor made of stainless steel SUS 304, which is a composition metal comprising iron as primary component, chromium, nickel, manganese and silicone, and equipped with a stirrer and a condenser were added 205 parts by weight of water under nitrogen atmosphere and heated to 80°C under stirring. Then, 1.8 parts by weight of laurinic acid, 1265 parts by weight of 28% aqueous sodium hydroxide, and 1810 parts by weight of 2,4-di-t-butylphenol were added thereto, and 439 parts by weight of 35% hydrogen peroxide were added thereto over 4 hours and 30 parts by weight of hydrogen peroxide were added thereto over 2 hours and completed the reaction. After completion of the reaction, the reaction mixture was cooled to 70°C, and 442 parts by weight of 5% aqueous sodium sulfite solution and 1590 parts by weight of xylene were added thereto, and then neutralized with sulfuric acid at 60 to 70°C.

### (ii) Extraction of 3,3',5,5'-tetra-t-butylbiphenyl-2,2'-diol

To the neutralized reaction mass were added 2640 parts by weight of xylene at 60 to 70°C , and the resulting organic material was extracted, settled and water phase was removed from the reactor and the remaining xylene phase was washed with 905 parts by weight of water warmed at 60 to 70°C. After being settled, the resulting water phase was removed from the reactor. The reactor containing the separated organic phase was evacuate by reducing the pressure to 25 kPa. Then, the organic phase was heated at the pressure and at a temperature of 93 to 96°C under reflux for 4 hours to remove water by a water-separating funnel equipped to the reactor, thereby dehydrated. After the dehydration, 6129 parts by weight of xylene solution containing 28 wt% of 3,3',5,5'-tetra-t-butylbiphenyl-2,2'-diol, 69 wt% of xylene, and 0.02 wt% water were obtained.

### (iii) Crystallization of 3,3',5,5'-tetra-t-butylbiphenyl-2,2'-diol

700 parts of thus obtained solution of 3,3',5,5'-tetra-t-butylbiphenyl-2,2'-diol in xylene were heated to 100°C and xylene was removed at a reduced pressure of about 18kPa(140mmHg). After adding 160 parts by weight of methanol at the temperature thereto, the resulting mixture was cooled to room temperature to precipitate the crystals of the desired compound. Precipitated crystals were collected by filtration, and the collected crystals were washed with methanol, and the washed crystals were dried to give 176.5 parts by weight of 3,3',5,5'-tetra-t-butylbiphenyl-2,2'-diol (purity 99.5%, impurities: 0.4%, water: 0.02%). 3,3',5,5'-tetra-t-butylbiphenyl-2,2'-diol was isolated in a recovery ratio of 89.6%.

### Example 1 Synthesis of dioxaphosphepine

### (a) Synthesis of 3,3',5,5'-tetra-t-butylbiphenyl-2,2'-diol

6134 parts by weight of a solution of 3,3',5,5'-tetra-t-butylbiphenyl-2,2'-diol in xylene (content of 3,3',5,5'-tetra-t-butylbiphenyl-2,2'-diol: 28 wt%, xylene: 69.2%, and water: 0.05 wt%) was obtained in a similar manner as above except that the refluxing of the solution of 3,3',5,5'-tetra-t-butylbiphenyl-2,2'-diol in xylene in (ii) above was continued over a period of 30 minutes.

### (b) Reaction of the solution of 3,3',5,5'-tetra-t-butylbiphenyl-2,2'-diol in xylene with PCl₃ and then with 3-(3-t-butyl-4-hydroxy-5-methylphenyl)-propanol

To 613 parts by weight of the xylene solution thus obtained were added 62 parts by weight of phosphorous trichloride, and then 188 parts by weight of diisopropylethylamine were added thereto over 3 hours at 50 to 65°C under stirring and kept at the temperature for 1 hour.

Then 104 parts by weight of 3-(3-t-butyl-4-hydroxy-5-methylphenyl)propanol were added thereto at 50 to 65°C and kept thereafter at 60 to 80°C for 1 hour to give a reaction mixture containing 2,4,8,10-tetra-t-butyl-6-[3-(3-methyl-4-hydroxy-5-t-butylphenyl)-propoxy]dibenzo[d,f][1,3,2]dioxaphosphepine, hereinafter referred to as "dioxaphosphepine".

The obtained reaction mixture was washed with water, 3 wt% aqueous sodium hydroxide solution. The separated organic phase was distilled under heating and reduced pressure to remove water and xylene. To the resulting residue were added 210 parts by weight of n-heptane and a small amount of seed crystals of the dioxaphosphepine, and then cooled to precipitate the crystals. Precipitated crystals were collected by filtration and washed n-heptane, then dried to give 225 parts of dioxaphosphepine as white crystals. The results are shown in Table 1 below.

### Reference Example

### Synthesis of dioxaphosphepine using dry 3,3',5,5'-tetra-t-butylbiphenyl-2,2'-diol

Dioxaphosphepine was synthesized in a similar manner as in the Example 1 above except that 172.5 parts by weight of the dried 3,3',5,5'-tetra-t-butylbiphenyl-2,2'-diol obtained in (iii) above, 423 parts by weight of xylene, and 62 parts by weight of phosphorous trichlroide were charged, and 188 parts by weight of diisopropylethylamine, 104 parts by weight of 3-(3-t-butyl-4-hydroxy-5-methylphenyl)propanol and 210 parts by weight of n-heptane were used. 210 parts by weight of dioxaphosphepine were obtained. The results are shown in Table 1 below.

**Table 1**

| | Biphenol (III) | | | Compound (I) | |
|---|---|---|---|---|---|
| | Solution or solid | Content(%) | Water content(%)* | Yield (%) | Purity (%) |
| Example 1 | Xylene solution | 28 wt% | 0.02 mol% | 78.7% | 99.1% |
| Reference Example | Dried solid | 99.5 wt% | 0.01 mol% | 72.0% | 99.3% |

| | | | | | |
|---|---|---|---|---|---|
| * : Water content per mol of biphenol (III). Yield of compound (I) is based on the phenol (II). | | | | | |

## Claims

1. A process for producing a phosphite of the formula (I): 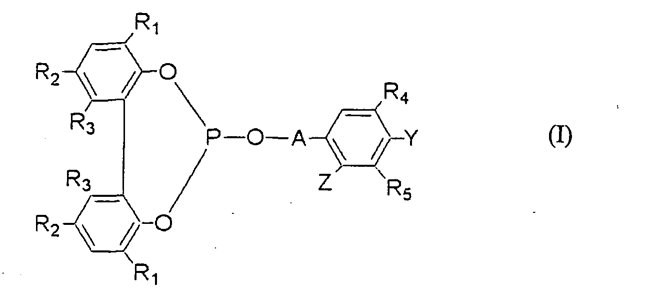 wherein R₁, R₂, R₄ and R₅ each independently represent
a hydrogen atom, a C1-8 alkyl group, a C5-8 cycloalkyl group,
a C6-12 alkylcycloalkyl group, a C7-12 aralkyl group or
a phenyl group or a phenyl group substituted with an alkyl or an alkoxy group;
R₃ represents a hydrogen atom or a C1-8 alkyl group;
A represents a C2-8 alkylene group or a *-C(=O)- or *-C(=O)-R₇- group in which R₇ represents a C1-8 alkylene group, and the bond marked with * is the bond connected with the oxygen atom; and
one of Y and Z represents a hydroxyl group, a C1-8 alkoxy group or a C7-12 aralkyloxy group and the other one represents a hydrogen atom or a C1-8 alkyl group,
which process comprises the steps of
(a) coupling a phenol compound of formula (II): 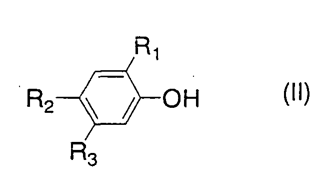 wherein R₁ to R₃ are as defined above, in the presence of an inert solvent under oxidative conditions to produce a reaction mixture comprising a biphenol of formula (III): 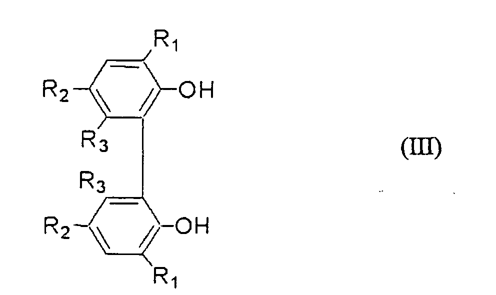 wherein R₁ to R₃ are as defined above,
(b) extracting the biphenol compound of formula (III) from the reaction mixture with a hydrophobic organic solvent, and
(c) reacting the biphenol compound of formula (III) in the solution of the hydrophobic organic solvent, with phosphorous trihalide, and
a hydroxyl compound of formula (IV): 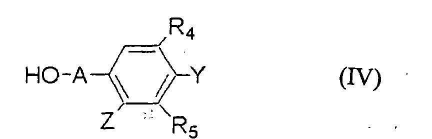
wherein R₄, R₅, Y, Z and A are as defined above, in the presence of a dehydrohalogenating agent.

2. A process according to claim 1, wherein the coupling of the phenols of formula (II) is conducted by reacting the phenol compound of formula (II) as defined, with hydrogen peroxide in an inert solvent in the presence of a base.

3. A process according to claim 1 or 2, wherein the coupling reaction is conducted in a reactor made of iron or iron-containing material.

4. A process according to claim 3, wherein the solution of the biphenol compound of formula (III) in the hydrophobic organic solvent employed in the extracting step is then washed with water and the washed hydrophobic organic solvent solution is dehydrated and then reacted with phosphorous trihalide and with the hydroxyl compound of formula (IV) as defined.

5. A process according to any one of claims 1 to 4, wherein the
hydrophobic organic solvent is an aromatic hydrocarbon solvent,
an aliphatic hydrocarbon solvent, or an aliphatic ether solvent.

6. A process according to any one of claims 1 to 5, wherein the coupling reaction is conducted in the presence of a carboxylic acid salt of formula (V):
[R₆-COO-]ₙ Mⁿ⁺ (V)
wherein R₆ represents an alkyl group, cycloalkyl group, a phenyl group, or a phenyl group substituted with an alkyl or alkoxy group,
n represents a integer of 1 or 2, and
when n represents 1, M represents an alkali metal atom, and
when n represents 2, M represents an alkaline earth metal atom.

7. A process according to any one of claims 1 to 6, wherein said dehydrohalogenating agent is a C6-14 N,N,N-trialkylamine.

8. A process according to claim 7, wherein said C6-14 N,N,N-trialkylamine is tributylamine, diisopropylethylamine, diisobutylethylamine, or di-t-butylethylamine.

9. A process according to claim 4, wherein the dehydration is conducted so that the dehydrated solution of the biphenol compound of formula (III) in hydrophobic organic solvent contains 0.03 mol or less of water per mol of the biphenol compound of formula (III).

10. A process according to any one of claims 1 to 9**,** which further comprises the step of crystallizing the resulting phosphite of formula (I) with an aliphatic hydrocarbon solvent.
